# EUROPÄISCHE PATENTSCHRIFT

(11) **EP 3 129 697 B1**
(45) Veröffentlichungstag und Bekanntmachung des Hinweises auf die Patenterteilung: **08.11.2023**
(21) Anmeldenummer: 15704741.6
(22) Anmeldetag: 05.02.2015
(51) Int. Cl.: B60L 5/04, B60L 5/36, B66C 13/12, B66C 19/00, B60M 1/30, B60L 5/38

(54) **POSITIONIERBEREICH FÜR EINE TRASSE ZUM VERTIKALEN EINFÜHREN VON STROMABNEHMERKONTAKTEN IN DIE STROMSCHIENEN DER TRASSE**
POSITIONING AREA FOR A ROUTE FOR VERTICALLY INSERTING CURRENT COLLECTOR CONTACTS IN THE CURRENT RAILS OF THE ROUTE
ZONE DE POSITIONNEMENT DANS UNE LIGNE POUR L'INTRODUCTION VERTICALE DE CONTACTS COLLECTEURS DE COURANT DANS LES RAILS CONDUCTEURS DE LA LIGNE

(30) Priorität: 11.04.2014 DE 102014105228
(43) Veröffentlichungstag der Anmeldung: 15.02.2017
(73) Patentinhaber: Paul Vahle GmbH & Co. KG, 59174 Kamen (DE)
(72) Erfinder: RAABE, Michael, 59368 Werne (DE); MÜLLER, Thomas, 59174 Kamen (DE); WOYCZECHOWSKI, Steffen, 44388 Dortmund (DE)
(74) Vertreter: Lenzing Gerber Stute
(86) Internationale Anmeldenummer: PCT/EP2015/052422
(87) Internationale Veröffentlichungsnummer: WO 2015/154896

(56) Entgegenhaltungen:
- WO-A1-2012/130630
- WO-A2-2006/130189
- WO-A2-2010/054852
- CN-A- 101 993 005
- CN-U- 201 864 480

## Beschreibung

Die vorliegende Erfindung betrifft einen Positionierbereich für eine Trasse, wobei die Trasse mindestens eine Führungsschiene aufweist und die Führungsschiene zur Führung eines mit Stromabnehmerkontakten versehenen Stromabnehmerwagens eines an einem entlang der Trasse verfahrbaren Fahrzeuges angeordneten Stromabnehmersystems dient, und die Trasse zumindest eine Trassenstromschiene aufweist, wobei in dem Positionierbereich mittels einer Positioniereinrichtung des Stromabnehmersystems der Stromabnehmerwagen horizontal und vertikal zur Trasse verstellbar ist.

Aus der WO 2010/054852 A2 ist ein Stromabnehmersystem sowie eine Trasse für Containerstapelkräne bekannt. Am Containerstapelkran ist jeweils ein Stromabnehmersystem angeordnet, welches einen Teleskoparm aufweist, an dessen freiem Ende ein Stromabnehmerwagen vertikal verschieblich gelagert ist. Der Teleskoparm wird dabei mittels eines elektrischen, hydraulischen oder pneumatischen Antriebs horizontal relativ zur Stromschienenanordnung zugestellt, bis Anschläge des Stromabnehmerwagens gegen eine Prallplatte des Positionierungsbereichs der Trasse stoßen. Die vertikale Zustellung des Stromabnehmerwagens zu den Stromschienen erfolgt mechanisch über eine Einfahrrampe, wobei jeweils eine Einfahrrampe an jedem Ende der Stromschienenanordnung angeordnet ist. Nachteilig hierbei ist, dass für das vertikale Zustellen und Einführung des Stromabnehmerwagens mit seinen Stromabnehmerkontakten in die Trasse ein gewisser Platz benötigt wird und dass der Kran im Bereich der Einfahrrampe noch nicht mit elektrischer Energie versorgt wird. Da der Kran ohne elektrische Energiezufuhr über die Stromschienen keine Container absenken oder anheben kann, bedeutet dies, dass im Bereich der Einfahrrampe keine Container abgestellt werden können oder die Prallplatte mit Überstand zum Container ausgeführt werden muss.

Auch bei dem aus WO 2012/130630 A9 bekannten Stromzuführungssystem, wird zunächst der Stromabnehmerwagen horizontal und vertikal zu der Trassenführung und den Trassenstromschienen positioniert, wonach dann der Kran in Trassenrichtung verfahren wird und hierdurch der Stromabnehmerwagen mit seinen Laufrollen in die Trassenführungen und die Stromabnehmerkontakte in die Trassenstromschienen horizontal eingeführt werden. Sofern sich der Stromabnehmerwagen des aus WO 2012/130630 A9 bekannten Systems noch im Positionierbereich befindet, sind die Stromabnehmerkontakte noch nicht in die Trassenstromschienen eingeführt, wodurch auch bei diesem System im Positionierbereich keine Container abgestellt werden können. Ein solches System ist auch aus den Dokumenten CN 101 993 005 A und CN 201 864 480 U bekannt.

Aufgabe der vorliegenden Erfindung ist es, den Positionierbereich einer Trasse derart weiterzubilden, dass auch im Positionierbereich das Fahrzeug, insbesondere in Form eines Krans, ausreichend mit elektrischer Energie versorgt werden kann.

Diese Aufgabe wird vorteilhaft mit einem Positionierbereich gelöst, bei dem zumindest eine weitere Stromschiene im Bereich des Positionierbereichs angeordnet ist oder sich zumindest eine Trassenstromschiene über zumindest eine Führungsschiene der Trasse hinaus bis in den Positionierbereich hinein erstreckt und/oder verlängert ist. Dabei kann sich die weitere Stromschiene bzw. die Trassenstromschiene über mindestens 50%, bevorzugt mindestens 75%, besonders bevorzugt über mindestens 75-100%, der Längserstreckung des Positionierbereiches erstrecken. Die Stromabnehmerkontakte des Stromabnehmerwagens können somit vorteilhaft allein durch das horizontale und abschließend vertikale Zustellen des Stromabnehmerwagens in die weitere(n) Stromschiene(n) bzw. der sich in den Positionierbereich erstreckenden Trassenstromschiene(n) eingeführt werden, so dass das Fahrzeug, insbesondere der Kran oder Containerstapelkran bereits im Positionierbereich mit elektrischer Energie versorgt und damit die Hebefunktion des Kranes bereits im Positionierbereich genutzt werden kann.

Ferner ist eine Optimierung der Überstände des Stahlbaus zur Erhöhung der operativen Sicherheit möglich, da im Bereich des Stahlbaus für die Trasse und den Positionierbereich Container abgestellt werden können. Die abgestellten Container schützen somit den Stahlbau der Trasse. Durch den erfindungsgemäßen Positionierbereich kann die Trasse vorteilhaft verkürzt werden, wodurch Material eingespart und die Trasse insgesamt kostengünstiger gefertigt werden kann. Auch wird vorteilhaft eine Erhöhung des Installationsspielraums am Fahrzeug oder Kran (RTG) für den Teleskoparm des Stromabnehmersystems mit dem erfindungsgemäßen Positionierbereich erzielt, da der Teleskoparm nicht wie aus dem Stand der Technik bekannt in der Mitte des Krans sondern auch exzentrisch, d.h. außermittig, dazu am Kran befestigbar ist.

Dadurch, dass die Stromabnehmerkontakte des Stromabnehmerwagens bei stehendem Fahrzeug in die elektrifizierten bzw. elektrifizierbaren Stromschienen vertikal eingeführt werden, kann der Positionierbereich vorteilhaft kürzer ausgebildet werden. Je nachdem wie genau das Fahrzeug mit seinem Stromabnehmerwagen vor dem Positionierbereich angeordnet werden kann, ist die Länge der Längserstreckung in Trassenrichtung des Positionierbereichs bzw. der Prallplatte im besten Falle nur noch minimal länger auszubilden als die Breite des Stromabnehmerwagens. Voraussetzung hierfür ist jedoch, dass der Stromabnehmerwagen des Fahrzeuges mittels einer Positioniereinrichtung, welche fahrzeugseitig angeordnet ist, sowohl horizontal als auch vertikal verstellt bzw. zugestellt werden kann, wie es z.B. bei dem aus WO 2012/130630 A9 bekannten Stromzuführungssystem der Fall ist. So kann der Teleskoparm z.B. mittels Riemen- oder Kettenantrieb, elektrisch, pneumatisch oder hydraulisch ein- und ausgefahren werden. Das vertikale Zustellen des Stromabnehmerwagens kann ebenfalls mittels Ketten-, Riemen- oder Spindelantrieb erfolgen. Besonders bevorzugt wird der Antrieb mittels einer einzigen Schubkette, wobei hierbei für das horizontale Aus- und Einfahren des Teleskoparmes sowie für das vertikale Anheben und Absenken des Stromabnehmerwagens lediglich ein einziger Antrieb und nur eine Schubkettenanordnung benötigt wird. Vorteilhaft kann im Positionierbereich eine Prallplatte oder ein sonstiger Anschlag angeordnet sein, gegen die bzw. den der Stromabnehmerwagen horizontal verfahrbar bzw. verstellbar und damit in horizontaler Richtung relativ zur weiteren Stromschiene und Trassenstromschiene ausrichtbar ist. Nach dem horizontalen Anfahren gegen die Prallplatte kann der Stromabnehmerwagen anschließend vertikal solange verstellt werden, insbesondere angehoben werden, dass bis die Stromabnehmerkontakte in die weitere Stromschiene bzw. die im Positionierbereich angeordnete Trassenstromschiene eingreifen und diese kontaktieren.

Um den Stromabnehmerwagen in vertikaler Richtung relativ zur weiteren Stromschiene und den Trassenführungen und der mindestens einen Trassenstromschiene zu positionieren und zu führen kann vorteilhaft oberhalb und/oder unterhalb der weiteren Stromschiene bzw. des Stromschienenendes mindestens eine weitere Führungsschiene angeordnet sein. Diese dient auch als vertikaler Anschlag und kann sich vorteilhaft mit ihrem Ende der Trasse zugewandten Ende möglichst soweit bis in den Trassenbereich der Trasse hinein erstrecken, dass die Führungsschienen der Trasse mit ihren Enden unterhalb der weiteren Führungsschiene enden.

Sofern die weitere Stromschiene eine von der Trassenstromschiene getrennte Stromschiene ist, ist diese vorteilhaft mittels eines Stromschienenverbinders mit der Trassenstromschiene der Trasse verbunden.

Damit das vertikale Einführen, d.h. das Einführen der Stromabnehmerkontakte von unten in die Stromschienen im Positionierbereich problemlos erfolgen kann, ist die weitere Stromschiene bzw. zumindest der sich in dem Positionierbereich erstreckende Endbereich der Trassenstromschiene für das vertikale Einführen der Stromabnehmerkontakte des Stromabnehmerwagens ausgebildet, insbesondere weist sie kleine vertikale Einführtrichter oder Einführung auf.

Der Positionierbereich ist vorteilhaft für eine Stromzuführungstrasse eines Krans, insbesondere eines Containerstapelkrans (RTG - Rubber Tyred Gantries) ausgebildet. Es wird zudem ganz allgemein eine Trasse mit einem zuvor beschriebenen Positionierbereich beansprucht, wobei die Trassenstromschiene mehrere parallel zueinander angeordnete und gegeneinander isolierte Stromschienen aufweisen kann, die in einem Gehäuse oder an einem Träger an der Trasse angeordnet sind.

Zum Einführen der Stromabnehmerkontakte des Stromabnehmersystems in die Stromschiene der Trasse wird das Fahrzeug bzw. der Containerstapelkran zunächst so vor dem Positionierbereich positioniert, dass mittels der am Fahrzeug angeordneten Positioniereinrichtung des Stromabnehmersystems, welche einen einzigen Antrieb oder getrennte Antriebe für das horizontale und vertikale Zustellen des Stromabnehmerwagens aufweist, anschließend der Stromabnehmerwagen horizontal und vertikal verstellt werden kann, so dass die Stromabnehmerkontakte mit einer finalen vertikalen Verstellung des Stromabnehmerwagens, insbesondere einem vertikalen Anheben, im Positionierbereich in die weitere(n) Stromschiene(n) bzw. in den/die in den Positionierbereich hineinragenden Endbereich(e) der Trassenstromschienen eingeführt werden und ein elektrischer Kontakt zwischen den Stromschienen und den Stromabnehmerkontakten hergestellt wird. Durch eine Kraftregelung bei Nutzung von Drehfeldmagnetmotoren oder Stillstandsmotoren kann die Steuerung für die Positioniereinrichtung des Fahrzeuges in Kombination mit einer Positionserkennungseinheit (Sensorik) erkennen, wann der Stromabnehmerwagen gegen die Prallplatte bzw. den horizontalen Anschlag gefahren und/oder der Stromabnehmerwagen gegen die obere Führungsschiene des Positionierbereiches gefahren ist.

Nachfolgend wird die Erfindung anhand von Zeichnungen näher erläutert.

Es zeigen:
- Fig. 1 und 1a:: Vorderansicht und Seitenansicht auf den erfindungsgemäßen Positionierbereich mit angrenzender Trasse;
- Fig. 2:: mögliche Ausführungsform eines Stromabnehmersystems, bei dem mittels einer Schubkette und einem einzigen Antrieb der Stromabnehmerwagen sowohl horizontal als auch vertikal zugestellt wird;
- Fig. 3:: Seitenansicht auf den Positionierbereich und dem davor positionierten Stromabnehmersystem mit Teleskoparm und daran angeordnetem Stromabnehmerwagen, wobei der Teleskoparm noch nicht horizontal ausgefahren ist;
- Fig. 4a und 4b:: Vorderansicht und Seitenansicht auf den Positionierbereich und dem davor positionierten Stromabnehmersystem mit Teleskoparm und daran angeordnetem Stromabnehmerwagen, wobei der Teleskoparm horizontal ausgefahren ist und der Stromabnehmerwagen an der Prallplatte des Positionierbereichs anstößt, jedoch noch nicht vertikal angehoben worden ist;
- Fig. 5a und 5b:: Vorderansicht und Seitenansicht auf den Positionierbereich und das Stromabnehmersystem, wobei der Stromabnehmerwagen vertikal angehoben worden ist und die Stromabnehmerkontakte in die Stromschiene eingreifen und elektrischen Kontakt mit diesen haben;
- Fig. 6a und 6b:: Vorderansicht auf den Positionierbereich und die angrenzende Trasse mit in die Trasse eingefahrenem Stromabnehmerwagen sowie Querschnittsdarstellung durch die Trasse im Bereich des Stromabnehmerwagens;
- Fig. 7a-c:: alternative Ausführungsform des erfindungsgemäßen Positionierbereiches, bei der sich die untere Führungsschiene der Trasse über die gesamte Längserstreckung des Positionierbereiches erstreckt;
- Fig. 8a u. 8b:: Positionierbereiche gemäß dem Stand der Technik;
- Fig. 8c:: erfindungsgemäßer Positionierbereich mit im Positionierbereich elektrifizierter Stromschiene;
- Fig. 9a:: Seitenansicht auf einen Containerstapelkran im Bereich der Räder und des dazwischen angeordneten Stromabnehmersystems mit Stromabnehmerwagen;
- Fig. 9b:: Vorderansicht auf eine Trasse mit abgestelltem Container und Containerstapelkran;
- Fig. 10 u. 11:: Draufsicht auf eine Trasseneinfahrt und einen Containerstapelkran mit an verschiedenen Stellen angeordnetem Teleskoparm, wobei in Figur 10 ein 40 Fuß und in Figur 11 ein 20 Fuß Container gestapelt werden kann;
- Fig. 12 u. 13:: Draufsicht auf eine Trasseneinfahrt gemäß des Standes der Technik, mit einem Containerstapelkran mit einem mittig angeordnetem Teleskoparm, wobei in Figur 12 ein 40 Fuß und in Figur 13 ein 20 Fuß Container - gestapelt werden kann.

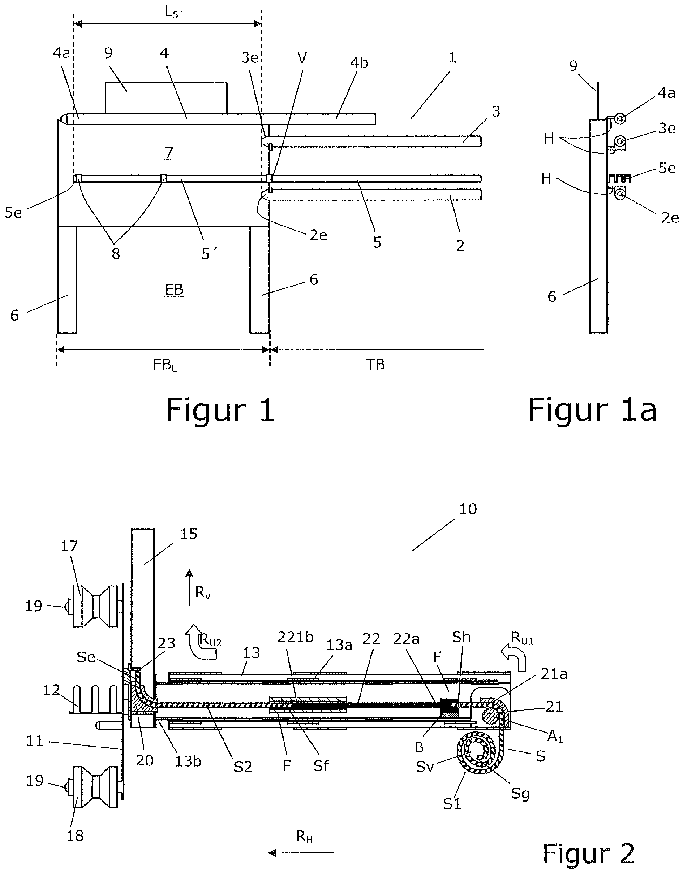

Die Figuren 1 zeigt eine Vorderansicht auf den erfindungsgemäßen Positionierbereich EP mit dem sich angrenzenden Trassenbereich TB der Trasse 1. Der Positionierbereich EP weist zwei Stützen 6 auf, an denen eine Prallplatte 7, sowie eine obere Führung 4 und die weitere Stromschiene 5'angeordnet sind. Die weitere Stromschiene 5'kann auch durch den Endbereich 5e der sich bis in den Positionierbereich EP hineinstreckenden Trassenstromschiene 5 gebildet sein. Der Positionierbereich EP hat eine Längserstreckung EB_{L}. Die Trassenführungen 2, 3, welche durch Rohre gebildet sind und mittels Abstandshaltern H an der Trasse 1 bzw. deren nicht dargestellten Trassenstützen befestigt sind, reichen mit ihren Enden 2e, 3e ein wenig in den Positionierbereich EP hinein. Sie können jedoch auch außerhalb des Positionierbereiches EP enden. Es ist lediglich darauf zu achten, dass sich die Trassenführungen 2, 3 und das in die Trasse 1 hineinragende Ende 4b der oberen Führung 4 miteinander überlappen, so dass der Stromabnehmerwagen mit seinen Laufrollen 17, 18 sicher vom Positionierbereich EP in die Trassenführungen 2, 3 eingeführt wird.

Sofern die im Positionierbereich EP angeordnete Stromschiene 5' nicht mit der Trassenstromschiene 5 einstückig ausgebildet ist, ist sie über einen Stromschienenverbinder V mit der Trassenstromschiene 5 zu verbinden. Ob dies genau an der in Figur 1 dargestellten Position oder weiter links oder rechts davon -erfolgt, ist für die Erfindung nicht wesentlich. Die Stromschiene 5' bzw. das Trassenstromschienenende 5e ist mittels Halterungen 8 an dem Positionierbereich EP befestigt. Oberhalb der Prallplatte 7 ist eine weitere Platte 9 angeordnet, welche zur Prallplattenerkennung dient.

Die Positionierung erfolgt in diesem Fall mittels Differenzlängenmessung zwischen der Prallplatte 7 und dem Reflektionsblech 9, welches in einem bestimmten Abstand montiert ist. Die Positionierung des Fahrzeugs relativ zum Positionierungsbereich EB kann jedoch auch anhand anderer Positionsinformationen, wie z.B. GPS, 2D-Scanner, Lichtschranke, Inkrementalgeber, etc. erfolgen.

Die Figur 1a zeigt eine Seitenansicht auf den Positionierbereich EB. Die Führungen 2, 3 und 4 sind mittels Halterungen H an dem Positionierbereich EB bzw. der Trasse 1 befestigt.

Die Figur 2 zeigt einen Längsschnitt durch eine mögliche Ausführungsform eines Stromabnehmersystems 10 mit einem Teleskoparm 13, welcher mittels der Schubkette S aus- und einfahrbar ist. Der Teleskoparm 13 weist die zwei ausfahrbaren Teleskopstufen 13a und 13b auf, wobei die vertikale Führung 15 für den Stromabnehmerwagen 11 an der am weitesten ausfahrbaren Teleskopstufe 13b angeordnet ist. Die erste Teleskopstufe 13 ist fest mit dem Fahrzeug bzw. Containerstapelkran verbunden und kann daher nicht teleskopiert werden.

Die Schubkettenanordnung S setzt sich zusammen aus den beiden Schubkettensegmenten S1 und S2 sowie dem dazwischen angeordneten steifen Kraftübertragungselement 22. Das eine Ende Sh des ersten Schubkettensegmentes S1 ist mit dem ersten Ende 22a des steifen Kraftübertragungselementes 22 verbunden. Das zweite Schubkettensegment S2 ist mit seinem ersten Ende Sf mit dem zweiten Ende 22b des steifen Kraftübertragungselementes 22 verbunden und wirkt mit seinem anderen Ende Se mit einem Anschlag 23 zusammen, welcher fest mit dem Stromabnehmerwagen 11 verbunden ist. Selbstverständlich ist es auch möglich, dass das Schubkettenende Se mit dem Teil 23 fest verbunden ist.

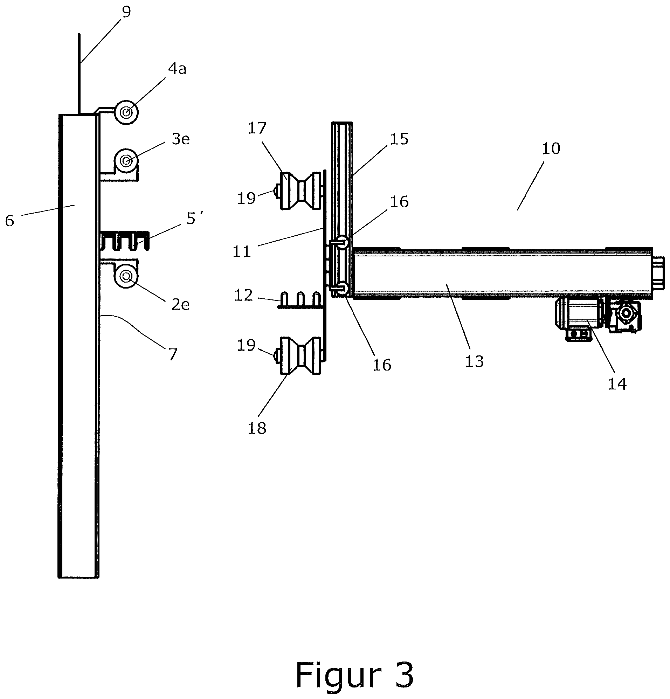

Das Schubkettensegment S1 ist derart konstruiert, dass es sich lediglich mittels des Umlenkkettenrades 21 und der Führung 21a in die erste Richtung R_{U1} umlenken lässt. Entgegen der Richtung R_{U1} ist das Schubkettensegment S1 knicksteif ausgebildet. Die Schubkettenanordnung S wird mittels des Umlenkzahn- bzw. Umlenkkettenrades 21 zum Ein- und Ausfahren des Teleskoparmes 13, sowie zumindest zum Anheben des Stromabnehmerwagens 11 angetrieben. Sofern der Antrieb 14 (siehe Figur 3) stromfrei geschaltet wird, kann sich die Schubkettenanordnung S aufgrund der von außen auf das Stromabnehmersystem 10 wirkenden Kräfte frei um das Umlenkkettenrad 21 herum bewegen, so dass der Teleskoparm 13 ohne größere Gegenkräfte frei ein- und ausgefahren werden kann, um den sich ändernden Abstand zwischen Fahrzeug und Trasse T auszugleichen. Ebenso kann der Stromabnehmerwagen 11 entlang der Führung 2, 3 vertikal frei verfahren, sobald der Schubkettenantrieb 14 stromfrei geschaltet ist. Sofern die beiden Schubkettensegmente S1 und S2 aus den gleichen Schubkettengliedern zusammengesetzt sind, sind die beiden Schubkettensegmente S1 und S2 um einen Winkel von 180 zueinander verdreht an dem Kraftübertragungselement 22 angeordnet, damit die Richtungsumlenkungen R_{U1} und R_{U2} durch die Umlenkeinrichtungen 20 und 21, 21a in entgegengesetzte Richtungen möglich ist. Es ist selbstverständlich ebenso möglich, dass die Umlenkung mittels des Umlenkkettenrades 21 bspw. in eine Richtung erfolgt, welche senkrecht zur Zeichnungsebene gerichtet ist.

Wie in Figur 2 dargestellt, werden mittels der Umlenkeinrichtung 20 die Schubkettenglieder des Schubkettensegmentes S2 in die Richtung R_{U2} umgelenkt. Die Schubkettenglieder sind derart konstruiert, dass sich das Schubkettensegment S2 lediglich mittels der Umlenkeinrichtung 20, welche gebogene Führungsflächen für die Schubkettenglieder aufweist, in die Richtung R_{U2} umlenken lässt. Entgegen der Richtung R_{U2} ist das Schubkettensegment S2 knicksteif. Figur 2 zeigt den Teleskoparm 2 im eingefahrenen Zustand. Der freie Endbereich Sv bzw. das freie Schubkettenende Sg des ersten Schubkettensegmentes S1, welcher bzw. welches noch nicht zur Kraftübertragung benötigt wird bzw. sich noch nicht im Bereich zwischen dem Umlenkzahnrad 21 und der Umlenkeinrichtung 20 befindet, wird platzsparend aufgerollt. Es ist jedoch auch möglich, dass das freie Ende Sg mäanderförmig oder parallel zum Teleskoparm 13 bevorratet wird.

Die Schubkettenanordnung ist mittels einer Führung F, welche an der zweiten Teleskopstufe 13b angeordnet ist, geführt. Die Führung F kann z.B. ein U-Profil gebildet sein. Optional kann der durch das U-Profil gebildete Raum mittels einer Deckelplatte verschlossen sein. Mittels der Deckelplatte wird verhindert, dass die Schubkette S1 ungewollt nach oben hin knickt.

Die Figur 3 zeigt eine Seitenansicht auf den Positionierbereich EB und dem davor positionierten Stromabnehmersystem 10, welches einen Teleskoparm 13 und einen daran angeordnetem und vertikal entlang der Vertikalführung 15 angeordneten Stromabnehmerwagen 11 aufweist. Der Teleskoparm 13 ist noch nicht horizontal nach links ausgefahren und der Stromabnehmerwagen 12 befindet sich in seiner unteren Position.

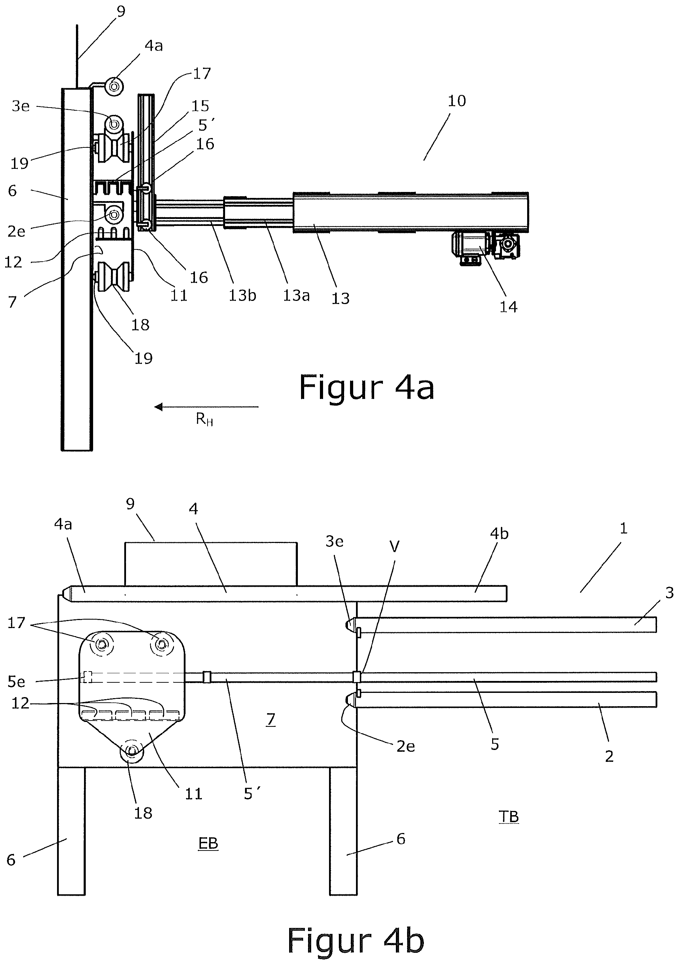

Die Figuren 4a und 4b zeigen eine Vorderansicht und Seitenansicht auf den Positionierbereich EB und dem davor positionierten Stromabnehmersystem 10, wobei der Teleskoparm 13, bestehend aus den Teleskopstufen 13a und 13b, horizontal nach links ausgefahren ist und der Stromabnehmerwagen 11 mit seinen Laufrollen 17, 18 und deren Anschlagrollen 19 gegen die Prallplatte 7 des Positionierbereichs EB stößt. Der Stromabnehmerwagen 12 befindet sich weiterhin in der untersten Position, in der sich die Stromabnehmerkontakte 12 noch unterhalb der weiteren Stromschiene 5' befinden. Auch die Laufrollen 17, 18 befinden sich noch unterhalb der Führungen 2, 3 und 4.

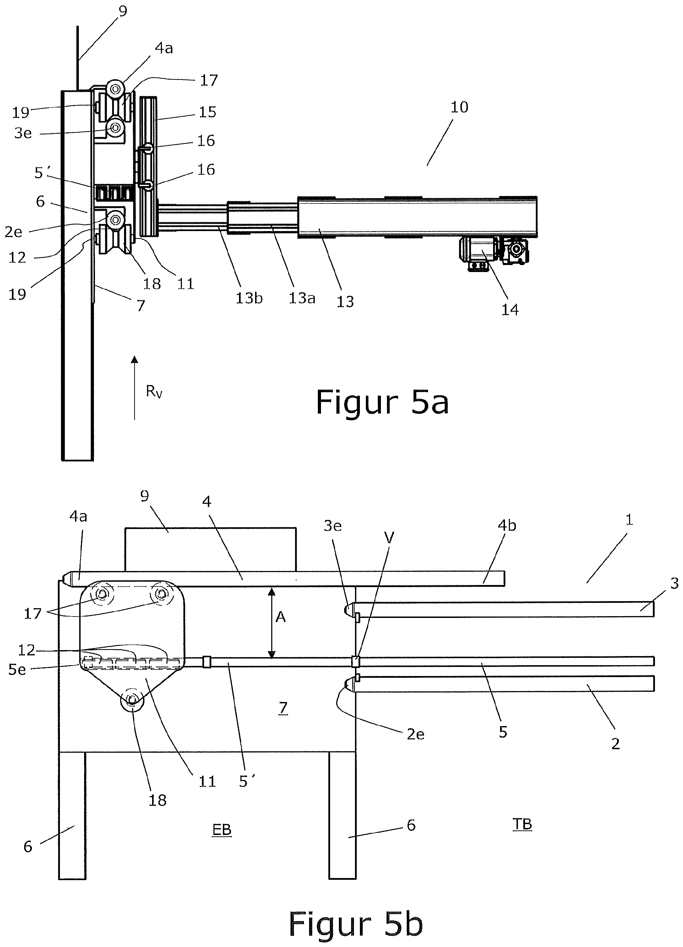

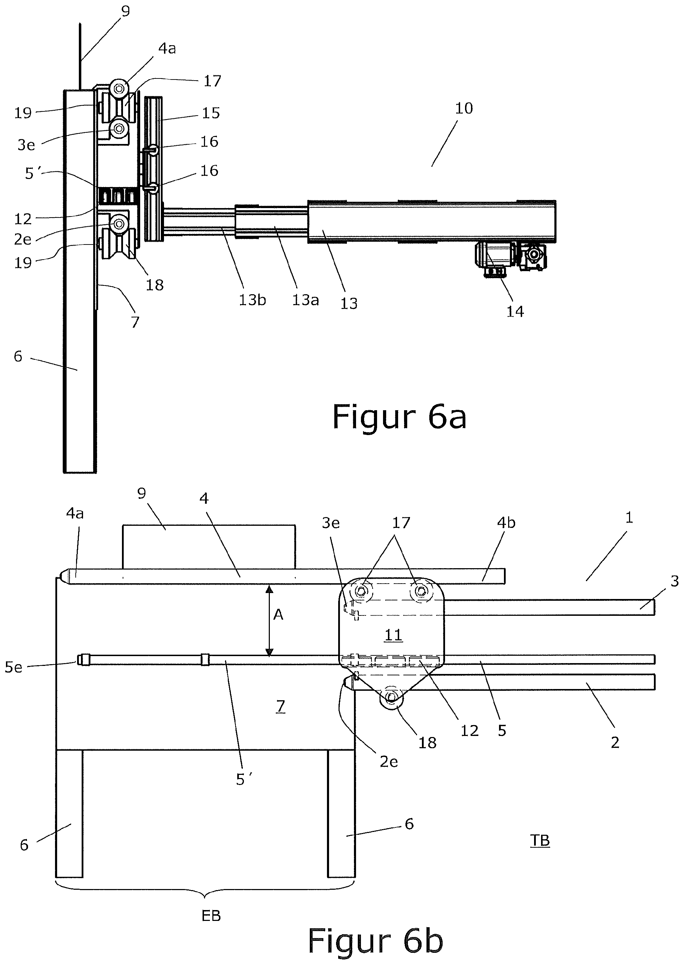

Durch das vertikale Anheben des Stromabnehmerwagens 11 gelangt dieser in die in den Figuren 5a und 5b dargestellte Position, in der er mit seinen oberen Laufrollen von unten gegen die obere Führung 4 stößt und die Stromabnehmerkontakte 12 in die Stromschiene 5' eingreifen und elektrischen Kontakt mit diesen haben. Es ist zu erkennen, dass die Laufrollen 17, 18, welche als Diabolorollen ausgebildet sind, so zu den Trassenführungen 2, 3 positioniert sind, dass durch ein Verfahren des Stromabnehmerwagens 12 in Richtung der Trasse 1 der von der oberen Führung 4 geführte Stromabnehmerwagen 12 mit seinen Laufrollen 17, 18 auf die Trassenführungen 2, 3 auffährt und anschließend von diesen in horizontaler und vertikaler Richtung geführt ist, wie dies in den Figuren 6a und 6b dargestellt ist.

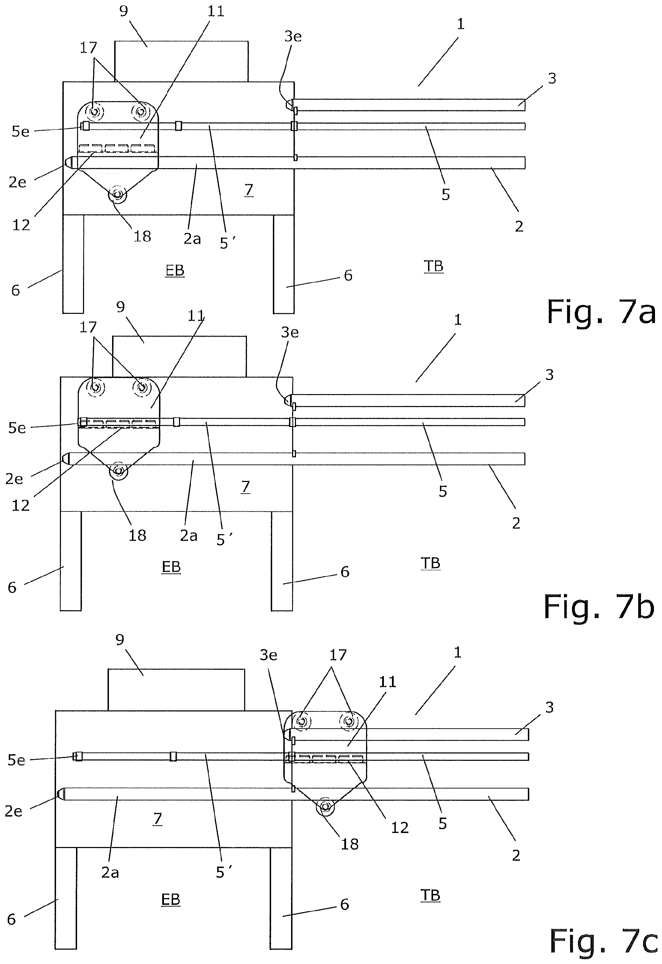

Die Figuren 7a bis 7c zeigen das Positionieren und Einführen des Stromabnehmersystems in eine alternative Ausführungsform des erfindungsgemäßen Positionierbereiches EB, bei dem sich die untere Führungsschiene 2 der Trasse 1 über die gesamte Längserstreckung EB_{L} des Positionierbereiches EB mit ihrem Ende 2a erstreckt. Hierdurch ist es möglich, auf die zusätzliche Führungsschiene 4 gemäß der in den Figuren 1 bis 6b dargestellten Ausführungsform zu verzichten. Optional kann die Führungsschiene 4 selbstverständlich noch vorgesehen werden. Die Figur 7a zeigt die Stellung, nachdem der Teleskoparm 10 horizontal soweit ausgefahren worden ist, bis der Stromabnehmerwagen 11 gegen die Prallplatte 7 anschlägt. Dabei ist zu beachten, dass der Teleskoparm 10 so am Fahrzeug KR angebracht ist, dass sichergestellt ist, dass sich die Stromabnehmerkontakte 11 beim horizontalen Ausfahren des Teleskoparmes 10 oberhalb der unteren Führungsschiene 2, 2a befinden. Die Figur 7b zeigt die Stellung, nachdem der Stromabnehmerwagen 11 vertikal nach oben verfahren worden ist, die Stromabnehmerkontakte 11 in die Stromschiene 5' eingreifen und diese kontaktieren und die untere Laufrolle 18 von unten gegen die untere Führungsschiene 2a drückt. Anschließend kann das Fahrzeug in Trassenrichtung verfahren werden, wodurch auch die oberen Laufrollen 17 von oben um die obere Führungsschiene 3 greifen und der Stromabnehmerwagen 11 von den Führungsschienen 2, 3 sicher gehalten und geführt ist.

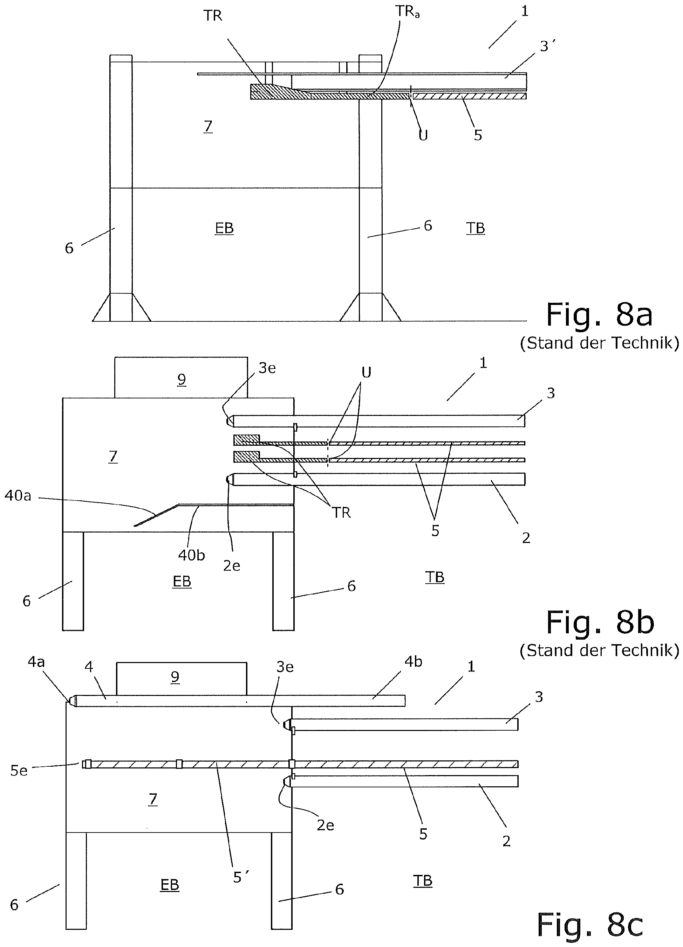

Die Figuren 8a und 8b zeigen die Positionierbereiche EB wie sie aus dem Stand der Technik bekannt sind. Der in Figur 8a dargestellte Positionier EB, welcher für ein aus WO 2012/130630 A9 bekanntes Stromzuführungssystem verwendet wird, weist eine Prallplatte 7 auf, die an Stützen 6 befestigt ist. Bei diesem System wird zunächst der nicht dargestellte Stromabnehmerwagen horizontal gegen die Prallplatte 7 verstellt, um danach mittels eines Vertikalantriebes, welcher am Teleskoparm angeordnet ist, vertikal soweit nach ober verstellt zu werden, bis der Stromabnehmerwagen durch einen mechanischen Anschlag vertikal positioniert worden ist. Anschließend wird das Fahrzeug in Trassenrichtung bewegt, wodurch die Stromabnehmer in den Einführungstrichter TR gelangen, welcher nicht elektrifiziert ist, und die am Stromabnehmerwagen angeordneten Laufrollen in die horizontalen Trassenträger 3' einfahren und dadurch der Stromabnehmerwagen von der Trasse 1 geführt und gehalten ist. Der Einführtrichter TR erstreckt sich mit seinem horizontalen Führungsbereich TRₐ bis in den Trassenbereich TB hinein, wobei ein Spalt U vorgesehen ist, damit der Führungsbereich TRₐ nicht mit der elektrifizierter Stromschiene 5 in Kontakt kommt.

Bei dem in Figur 8b dargestellten System sind Führungsschienen 40a, 40b im Positionierbereich EB vorgesehen, welche den gegen die Prallplatte 7 horizontal mittels des Teleskoparmes verstellten Stromabnehmerwagen 11 beim Verfahren des Fahrzeuges in Trassenrichtung anheben, so dass er zu den Führungsschienen 2, 3 und den Einführtrichtern TR der Trasse 1 horizontal und vertikal positioniert ist. Auch bei diesem System, welches für ein aus WO 2010/054852 A2 bekanntes Stromabnehmersystem verwendet wird, sind die Einführtrichter TR nicht elektrifiziert und mittels eines Spaltes bzw. elektrischen Isolators U von der elektrifizierten Stromschiene 5 der Trasse 1 entkoppelt.

Die Figur 8c zeigt den erfindungsgemäßen Positionierbereich EB mit der sich in den Positionierbereich EB hinein erstreckenden und elektrifizierten Stromschiene 5, 5'. Durch die durchgehende Elektrifizierung der Stromschiene 5, 5 ' ist das Fahrzeug sofort nach dem vertikalen Einfahren der Stromabnehmerkontakte elektrifiziert.

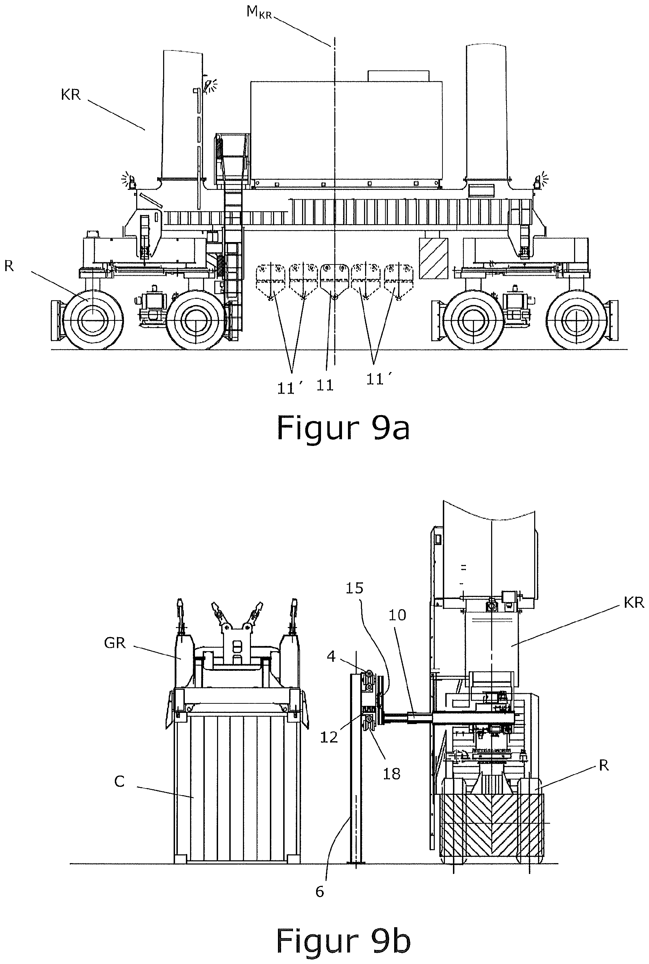

Die Figur 9a zeigt eine Seitenansicht auf einen Containerstapelkran KR im Bereich der Räder R und des dazwischen angeordneten Stromabnehmersystems mit Stromabnehmerwagen 11, 11', welches auf der Mittelachse M_{KR} des Krans KR oder auch seitlich (11') dazu angeordnet werden kann. Dies ist möglich, da der Containerstapelkran bereits im erfindungsgemäßen Positionierbereich EB elektrifiziert ist.

Die Figur 9b zeigt eine Vorderansicht auf eine Trasse mit abgestelltem Container C und Containerstapelkran KR, wobei der Teleskoparm 10 horizontal ausgefahren ist, so dass der Stromabnehmerwagen 11 gegen die Prallplatte 7 der Trasse 1 stößt.

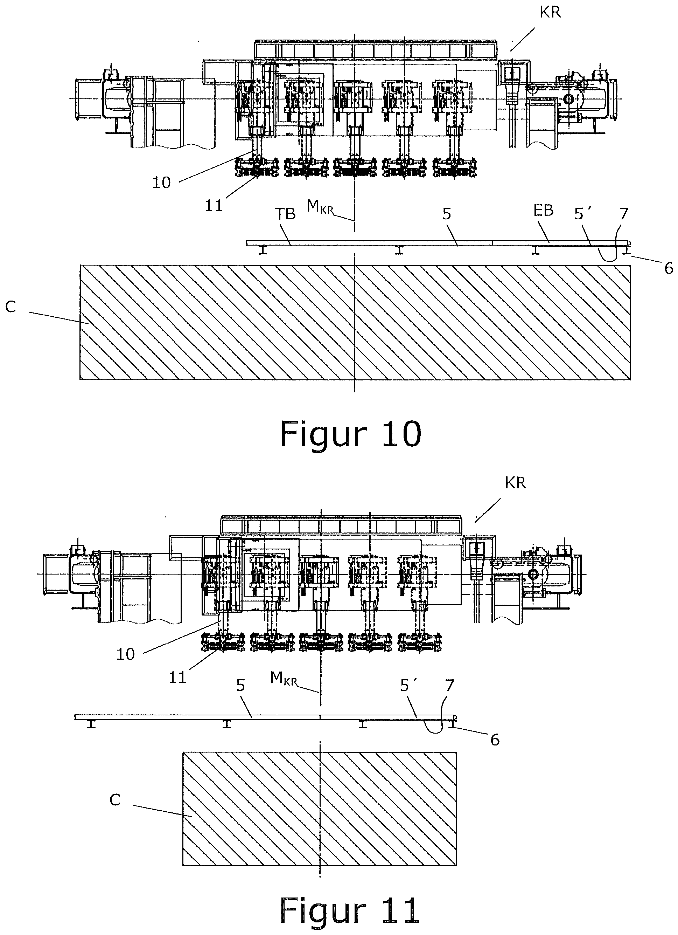

Die Figuren 10 und 11 zeigen eine Draufsicht auf eine Trasseneinfahrt und einen Containerstapelkran KR mit an verschiedenen Stellen angeordnetem Teleskoparmen 10. Dadurch, dass sich die Stromschiene 5' bis in den Positionierbereich EB hinein erstreckt, kann der Container C bereits im Positionierbereich EB abgesetzt und angehoben werden, selbst dann, wenn der Teleskoparm 10 außermittig am Kran angeordnet ist, wie dies durch die gestrichelt dargestellten Teleskoparme 10' verdeutlicht ist. Selbst bei außermittiger Anordnung der Teleskoparme 10' können sowohl 20 Fuß als auch 40 Fuß Container C so abgesetzt werden, dass sie mit dem Positionierbereich EB bündig abschließen.

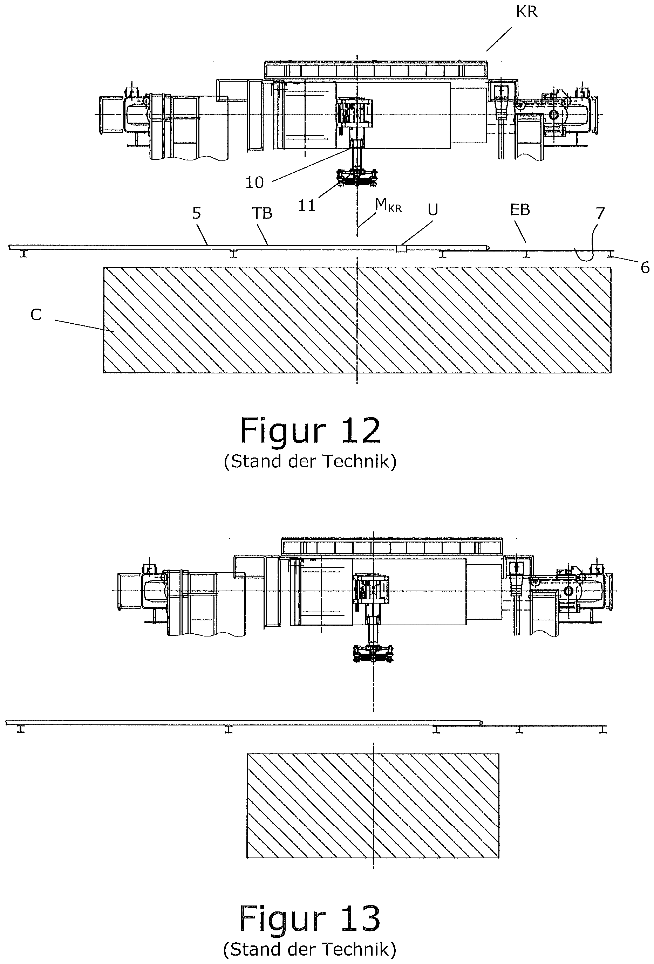

Die Figuren 12 und 13 zeigen eine Draufsicht auf eine Trasseneinfahrt mit nicht elektrifizierten Positionierbereichen gemäß dem Stand der Technik. Bei diesen ist es nicht möglich, sowohl 20 Fuß als auch 40 Fuß Container C mit einem aussermittig angeordneten Teleskoparm 10 bündig zum Anfang des Positionierbereiches EB abzustellen bzw. von dort anzuheben, wie es beim erfindungsgemäß elektrifizierten Positionierbereich EB möglich ist. In den Figuren 12 und 13 deutlich zu erkennen, dass der Kran KR soweit in die Trasse einfahren muss, bis sich der Teleskoparm 11 mit seinen Stromabnehmerkontakten 12 im Trassenbereich TB befindet. Würde der Teleskoparm 10 weiter rechts versetzt zur Mittelachse M_{KR} am Kran KR befestigt, so müsste der Kran KR um den Versatz weiter nach links in die Trasse einfahren, damit der Stromabnehmerwagen 11 mit seinen Stromabnehmerkontakten über den Spalt U in die Stromschienen 5 eingefahren ist. Erst dann ist der Kran KR elektrifiziert und kann den Container C anheben und absetzen. Dann würde aber auch der 40 Fuß Container C nicht mehr bündig zum Positionierbereich EB abgesetzt werden können.

## Patentansprüche

1. Positionierbereich (EB) für eine Trasse (1), wobei die Trasse (1) mindestens eine Führungsschiene (2, 3) aufweist und die Führungsschiene (2,3) zur Führung eines mit Stromabnehmerkontakten (12) versehenen Stromabnehmerwagens (11) eines an einem entlang der Trasse (1) verfahrbaren Fahrzeuges angeordneten Stromabnehmersystems (10) dient, und die Trasse (1) zumindest eine Trassenstromschiene (5) aufweist, wobei der Positionierbereich (EB) der Bereich ist, in dem mittels einer Positioniereinrichtung des Stromabnehmersystems (10) der Stromabnehmerwagen (11) horizontal und vertikal zur Trasse (1) positioniert wird, **dadurch gekennzeichnet, dass** zumindest eine weitere Stromschiene (5') im Bereich des Positionierbereichs (EB) angeordnet ist oder sich zumindest eine Trassenstromschiene (5) mit ihrem Ende (5e) bis in den Positionierbereich (EB) hinein erstreckt und/oder verlängert ist und dass die weitere Stromschiene (5') bzw. zumindest der sich in dem Positionierbereich (EB) erstreckende Bereich (5e) der Trassenstromschiene (5) für das vertikale Einführen der Stromabnehmerkontakte (12) des Stromabnehmerwagens (11) ausgebildet ist.

2. Positionierbereich (E) nach Anspruch 1, **dadurch gekennzeichnet, dass** sich die weitere Stromschiene (5') bzw. sich die Trassenstromschiene (5) über mindestens 50%, bevorzugt mindestens 75%, besonders bevorzugt über mindestens 75-100%, der Längserstreckung (EB_{L}) des Positionierbereiches (EB) erstreckt.

3. Positionierbereich (EB) nach Anspruch 1 oder 2, **dadurch gekennzeichnet, dass** im Positionierbereich (EB) eine Prallplatte (7) angeordnet ist, gegen die der Stromabnehmerwagen (11) horizontal verstellbar ist.

4. Positionierbereich (EB) nach Anspruch 1, **dadurch gekennzeichnet, dass** oberhalb und/oder unterhalb der weiteren Stromschiene (5') bzw. des Stromschienenendes (5e) mindestens eine weitere Führungsschiene (4) zur vertikalen Ausrichtung und/oder als vertikaler Anschlag für den Stromabnehmerwagen (12) angeordnet ist.

5. Positionierbereich (EB) nach Anspruch 4, **dadurch gekennzeichnet, dass** sich die weitere Führungsschiene (4) mit ihrem Ende (4b) bis in den Trassenbereich (TB) der Trasse (1) hinein erstreckt.

6. Positionierbereich (EB) nach einem der vorhergehenden Ansprüche,
**dadurch gekennzeichnet, dass** die weitere Stromschiene (5') mittels eines Stromschienenverbinders (V) mit der Stromschiene (5) der Trasse (1) verbunden ist.

7. Positionierbereich (EB) nach einem der vorhergehenden Ansprüche,
**dadurch gekennzeichnet, dass** die Führungsschienen (2, 3) der Trasse (1) mit ihren Enden (2e, 3e) unterhalb der weiteren Führungsschiene (4) enden.

8. Positionierbereich (EB) nach einem der vorhergehenden Ansprüche,
**dadurch gekennzeichnet, dass** die Trasse (1) eine Stromzuführungstrasse eines Krans, insbesondere eines Containerstapelkrans (RTG) ist.

9. Positionierbereich (EB) nach einem der vorhergehenden Ansprüche,
**dadurch gekennzeichnet, dass** mittels der weiteren Stromschiene (5') oder mittels der Trassenstromschiene (5), welche sich, insbesondere über zumindest eine Führungsschiene (2, 3) der Trasse (1) hinaus, bis in den Positionierbereich (EB) hinein erstreckt und/oder verlängert ist, das Fahrzeug im Positionierbereich (EB) mit elektrischer Energie versorgbar ist.

10. Positionierbereich (EB) nach einem der vorhergehenden Ansprüche,
**dadurch gekennzeichnet, dass** sich die untere Führungsschiene (2) der Trasse (1) hinaus bis in den Positionierbereich (EB) hinein, insbesondere über mindestens 50-100% der Längserstreckung (EB_{L}) des Positionierbereiches (EB), erstreckt und/oder verlängert ist.

11. Trasse (1) mit einem Positionierbereich (EB) nach einem der vorhergehenden Ansprüche.

12. Trasse (1) nach Anspruch 11, **dadurch gekennzeichnet, dass** die Trassenstromschiene (5) mehrere parallel zueinander angeordnete und gegeneinander isolierte Stromschienen aufweist, die in einem Gehäuse oder an einem Träger angeordnet sind.

13. Verfahren zum Kontaktieren der Stromabnehmerkontakte eines Stromabnehmersystems im Bereich des Positionierbereichs (EB) nach einem der vorhergehenden Ansprüche, **dadurch gekennzeichnet, dass** das Fahrzeug zunächst so vor dem Positionierbereich (EB) positioniert wird, dass mittels der am Fahrzeug angeordneten Positioniereinrichtung des Stromabnehmersystems (10) der Stromabnehmerwagen (11) anschließend horizontal und vertikal verstellt wird, so dass die Stromabnehmerkontakte (12) vertikal im Positionierbereich (EB) in die weiteren Stromschienen (5') bzw. in die in den Positionierbereich (EB) hineinragenden Endbereiche (5e) der Trassenstromschienen (5) eingeführt und ein elektrischer Kontakt zwischen den Stromschienen (5', 5e) und den Stromabnehmerkontakten (12) hergestellt werden.

14. Kransystem mit einer Trasse nach Anspruch 11 oder 12, **dadurch gekennzeichnet, dass** das Stromabnehmersystem (10) einen Antrieb (14) aufweist, der eine Schubkettenanordnung (S) antreibt, mittels derer der Teleskoparm (13, 13a, 13b) horizontal ein- und ausfahrbar und der Stromabnehmerwagen (11) in Richtung der im Positionierbereich (EB) angeordneten Stromschiene(n) (5', 5e) anhebbar ist.

## Claims

1. Positioning region (EB) for a track (1), the track (1) having at least one guide rail (2, 3) and the guide rail (2, 3) serving to guide a current collector trolley (11), provided with current collector contacts (12), of a current collector system (10) arranged on a vehicle which can be moved along the track (1), and the track (1) having at least one track current rail (5), the positioning region (EB) being the region in which the current collector trolley (11) is positioned horizontally and vertically with respect to the track (1) by means of a positioning device of the current collector system (10), **characterized in that** at least one further current rail (5') is arranged in the region of the positioning region (EB), or at least one track current rail (5) extends with its end (5e) into the positioning region (EB) and/or is extended, and **in that** the further current rail (5') or at least the region (5e) of the track current rail (5) extending in the positioning region (EB) is designed for the vertical insertion of the current collector contacts (12) of the current collector trolley (11).

2. Positioning region (E) according to claim 1, **characterized in that** the further current rail (5') or the track current rail (5) extends over at least 50%, preferably at least 75%, particularly preferably over at least 75-100%, of the longitudinal extent (EB_{L}) of the positioning region (EB).

3. Positioning region (EB) according to claim 1 or 2, **characterized in that** a baffle plate (7) is arranged in the positioning area (EB), against which the current collector trolley (11) can be adjusted horizontally.

4. Positioning region (EB) according to claim 1, **characterized in that** at least one further guide rail (4) is arranged above and/or below the further current rail (5') or the current rail end (5e) for vertical alignment and/or as a vertical stop for the current collector trolley (12).

5. Positioning region (EB) according to claim 4, **characterized in that** the further guide rail (4) extends with its end (4b) into the track region (TB) of the track (1).

6. Positioning region (EB) according to one of the preceding claims, **characterized in that** the further current rail (5') is connected to the current rail (5) of the track (1) by means of a current rail connector (V).

7. Positioning region (EB) according to one of the preceding claims, **characterized in that** the guide rails (2, 3) of the track (1) end with their ends (2e, 3e) below the further guide rail (4).

8. Positioning region (EB) according to one of the preceding claims, **characterized in that** the track (1) is a power supply track of a crane, in particular a container stacking crane (RTG).

9. Positioning region (EB) according to one of the preceding claims, **characterized in that** the vehicle in the positioning region (EB) can be supplied with electrical energy by means of the further current rail (5') or by means of the track current rail (5), which extends and/or is extended, in particular beyond at least one guide rail (2, 3) of the track (1), into the positioning region (EB).

10. Positioning region (EB) according to one of the preceding claims, **characterized in that** the lower guide rail (2) of the track (1) extends and/or is extended out into the positioning region (EB), in particular over at least 50-100% of the longitudinal extent (EB_{L}) of the positioning region (EB).

11. A track (1) with a positioning region (EB) according to any of the preceding claims.

12. A track (1) according to claim 11, **characterized in that** the track current rail (5) comprises a plurality of current rails arranged parallel to each other and insulated from each other, which are arranged in a housing or on a carrier.

13. Method for contacting the current collector contacts of a current collector system in the region of the positioning region (EB) according to one of the preceding claims, **characterized in that** the vehicle is first positioned in front of the positioning region (EB) in such a way that, by means of the positioning device of the current collector system (10) arranged on the vehicle, the current collector trolley (11) is then adjusted horizontally and vertically so that the current collector contacts (12) are inserted vertically in the positioning region (EB) into the further current rails (5') or into the end regions (5e) of the track current rails (5) extending into the positioning region (EB) and an electrical contact is established between the current rails (5', 5e) and the current collector contacts (12).

14. Crane system with a track according to claim 11 or 12, **characterized in that** the current collector system (10) comprises a drive (14) which drives a push chain arrangement (S) by means of which the telescopic arm (13, 13a, 13b) can be retracted and extended horizontally and the current collector trolley (11) can be raised in the direction of the current rail(s) (5', 5e) arranged in the positioning region (EB).

## Revendications

1. Zone de positionnement (EB) pour une ligne (1), où la ligne (1) présente au moins un rail de guidage (2, 3) et le rail de guidage (2, 3) sert à guider un chariot collecteur de courant (11) muni de contacts collecteurs de courant (12) d'un système collecteur de courant (10) disposé sur un véhicule pouvant être déplacé le long de la ligne (1), et la ligne (1) présente au moins un rail conducteur de ligne (5), où la zone de positionnement (EB) est la zone dans laquelle le chariot collecteur de courant (11) est positionné horizontalement et verticalement par rapport à la ligne (1) à l'aide d'un dispositif de positionnement du système collecteur de courant (10), **caractérisée en ce qu'**au moins un autre rail conducteur (5') est disposé dans la zone de la zone de positionnement (EB) ou au moins un rail conducteur de ligne (5) s'étend et/ou est prolongé avec son extrémité (5e) jusque dans la zone de positionnement (EB) et **en ce que** l'autre rail conducteur (5') ou au moins la zone (5e) du rail conducteur de ligne (5) s'étendant dans la zone de positionnement (EB) est conçue pour l'introduction verticale des contacts collecteurs de courant (12) du chariot collecteur de courant (11).

2. Zone de positionnement (E) selon la revendication 1, **caractérisée en ce que** l'autre rail conducteur (5') ou le rail conducteur de ligne (5) s'étend sur au moins 50 %, de préférence au moins 75 %, de manière particulièrement préférée sur au moins 75 à 100 %, de l'étendue longitudinale (EB_{L}) de la zone de positionnement (EB).

3. Zone de positionnement (EB) selon la revendication 1 ou 2, **caractérisée en ce qu'**une plaque de rebondissement (7) est disposée dans la zone de positionnement (EB), contre laquelle le chariot collecteur de courant (11) peut être déplacé horizontalement.

4. Zone de positionnement (EB) selon la revendication 1, **caractérisée en ce qu'**au-dessus et/ou au-dessous de l'autre rail conducteur (5') ou de l'extrémité de rail conducteur (5e) est disposé au moins un autre rail de guidage (4) pour l'alignement vertical et/ou comme butée verticale pour le chariot collecteur de courant (12).

5. Zone de positionnement (EB) selon la revendication 4, **caractérisée en ce que** l'autre rail de guidage (4) s'étend par son extrémité (4b) jusque dans la zone de ligne (TB) de la ligne (1).

6. Zone de positionnement (EB) selon l'une des revendications précédentes, **caractérisée en ce que** l'autre rail conducteur (5') est relié au rail conducteur (5) de la ligne (1) à l'aide d'un organe de liaison de rails conducteurs (V).

7. Zone de positionnement (EB) selon l'une des revendications précédentes, **caractérisée en ce que** les rails de guidage (2, 3) de la ligne (1) se terminent par leurs extrémités (2e, 3e) en dessous de l'autre rail de guidage (4).

8. Zone de positionnement (EB) selon l'une des revendications précédentes, **caractérisée en ce que** la ligne (1) est une ligne de guidage de courant d'une grue, en particulier d'une grue empileuse de conteneurs (RTG).

9. Zone de positionnement (EB) selon l'une des revendications précédentes, **caractérisée en ce qu'**à l'aide de l'autre rail conducteur (5') ou à l'aide du rail conducteur de ligne (5), qui s'étend et/ou est prolongé jusque dans la zone de positionnement (EB), en particulier par l'intermédiaire d'au moins un rail de guidage (2, 3) de la ligne (1), le véhicule peut être alimenté en énergie électrique dans la zone de positionnement (EB).

10. Zone de positionnement (EB) selon l'une des revendications précédentes, **caractérisée en ce que** le rail de guidage inférieur (2) de la ligne (1) s'étend et/ou est prolongé jusque dans la zone de positionnement (EB), en particulier sur au moins 50-100% de l'étendue longitudinale (EB_{L}) de la zone de positionnement (EB).

11. Ligne (1) avec une zone de positionnement (EB) selon l'une des revendications précédentes.

12. Ligne (1) selon la revendication 11, **caractérisée en ce que** le rail conducteur de ligne (5) présente plusieurs rails conducteurs disposés parallèlement les uns aux autres et isolés les uns des autres, qui sont disposés dans un boîtier ou sur un support.

13. Procédé pour mettre en contact les contacts collecteurs de courant d'un système collecteur de courant dans la zone de la zone de positionnement (EB) selon l'une des revendications précédentes, **caractérisé en ce que** le véhicule est d'abord positionné devant la zone de positionnement (EB) de telle sorte qu'à l'aide du dispositif de positionnement du système collecteur de courant (10) disposé sur le véhicule, le chariot collecteur de courant (11) est ensuite déplacé horizontalement et verticalement, de sorte que les contacts collecteurs de courant (12) sont insérés verticalement dans la zone de positionnement (EB) dans les autres rails conducteurs (5') ou dans les zones d'extrémité (5e) des rails conducteurs de ligne (5) qui font saillie dans la zone de positionnement (EB) et un contact électrique est établi entre les rails conducteurs (5', 5e) et les contacts collecteurs de courant (12).

14. Système de grue avec une ligne selon la revendication 11 ou 12, **caractérisé en ce que** le système collecteur de courant (10) présente un entraînement (14) qui entraîne un agencement de chaîne de poussée (S) à l'aide duquel le bras télescopique (13, 13a , 13b) peut être rentré et sorti horizontalement et le chariot collecteur de courant (11) peut être relevé en direction du ou des rails conducteurs (5', 5e) disposés dans la zone de positionnement (EB).
